(19) Europäisches Patentamt
European Patent Office
Office européen des brevets

(11) **EP 3 282 209 A1**

(12) **EUROPEAN PATENT APPLICATION**

(43) Date of publication:
**14.02.2018 Bulletin 2018/07**

(21) Application number: **17179502.4**

(22) Date of filing: **04.07.2017**

(51) Int Cl.:
**F25B 9/00** *(2006.01)*          **F25B 49/02** *(2006.01)*
**F25B 1/10** *(2006.01)*          **F25B 40/00** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.07.2016 KR 20160094970**

(71) Applicant: **LG Electronics Inc.**
**Yeongdeungpo-Gu**
**Seoul 07336 (KR)**

(72) Inventors:
• **WOO, Hyoungsuk**
  **08592 Seoul (KR)**
• **YANG, Dongkeun**
  **08592 Seoul (KR)**
• **KIM, Byeongsu**
  **08592 Seoul (KR)**

(74) Representative: **Ter Meer Steinmeister & Partner**
**Patentanwälte mbB**
**Nymphenburger Straße 4**
**80335 München (DE)**

(54) **SUPERCRITICAL REFRIGERATION CYCLE APPARATUS AND METHOD FOR CONTROLLING SUPERCRITICAL REFRIGERATION CYCLE APPARATUS**

(57)     A supercritical refrigeration cycle apparatus and a method for controlling a supercritical refrigeration cycle apparatus are provided. The supercritical refrigeration cycle apparatus may include a compressor (110); a gas cooler (140) configured to cool the compressed a refrigerant in a supercritical state; a pressure control electronic expansion valve (170) connected to the gas cooler (140); a storage unit (180) configured to temporarily store the refrigerant; a flow control electronic expansion valve (190) connected to an outlet side of the storage unit (180) to control a flow rate of the refrigerant; an evaporator (210) provided at an outlet-side pipe of the flow control electronic expansion valve (190); and a controller (250) configured to control the flow control electronic expansion valve (190) based on a suction superheat degree of refrigerant suctioned into the compressor (110) and a target suction superheat degree, and control the pressure control electronic expansion valve (170) based on a target operation high pressure and a current operation high pressure. In this way, flow control and pressure control of refrigerant may be respectively implemented in a separate manner, thereby enhancing reliability and operation efficiency of the compressor, respectively.

*FIG. 2*

EP 3 282 209 A1

## Description

## BACKGROUND

1. Field

A supercritical refrigeration cycle apparatus and a method for controlling a supercritical refrigeration cycle apparatus are disclosed herein.

2. Background

As is known, a refrigeration cycle apparatus may be configured to have a so-called vapor-compression refrigeration cycle including a compressor configured to compress refrigerant, a condenser in which refrigerant is radiated and condensed, an expansion apparatus configured to decompress and expand refrigerant, and an evaporator in which refrigerant is evaporated by absorbing ambient latent heat. On the other hand, there is a supercritical refrigeration cycle apparatus (hereinafter, referred to as a "supercritical refrigeration cycle apparatus") using carbon dioxide ($CO_2$) as refrigerant.

The supercritical refrigeration cycle apparatus may include a compressor configured to compress refrigerant in a supercritical state, a gas cooler configured to radiate heat from the compressed refrigerant, an expansion apparatus configured to decompress and expand refrigerant which has passed through the gas cooler, and an evaporator configured to allow refrigerant to absorb and evaporate ambient latent heat. According to the supercritical refrigeration cycle apparatus, in contrast to a condenser in the refrigeration cycle apparatus in which a phase change typically occurs, a refrigerating capacity and power consumption may vary according to a pressure change due to a change in an outlet temperature of the gas cooler.

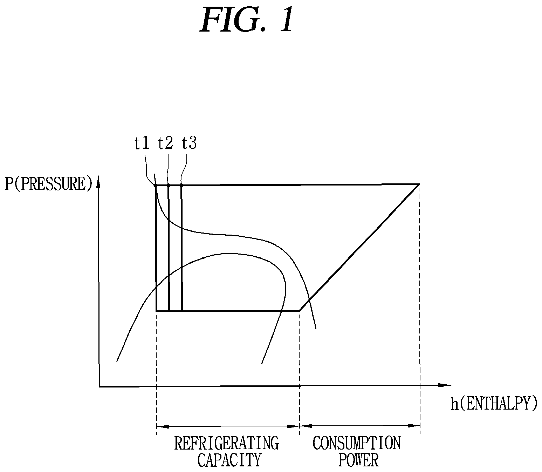

That is, as illustrated in FIG. 1, when comparing a first temperature, a second temperature, and a third temperature with different ambient temperatures, it is seen that the outlet temperature of the gas cooler relatively increases at the second and the third temperature (t2, t3) with relatively higher ambient temperatures compared to the first temperature (t1) with the lowest ambient temperature, and thus, their refrigerating capacity respectively decreases. According to the supercritical refrigeration cycle apparatus, there may exist "an appropriate operation high pressure" capable of maximizing a ratio of a power consumption change rate to a change rate of the refrigerating capacity. However, according to the related art supercritical refrigeration cycle apparatus, liquid refrigerant may be suctioned into the compressor, and due to this, an opening degree of the expansion apparatus should be controlled in consideration of a suction superheat degree of refrigerant suctioned into the compressor and the appropriate operation high pressure at the same time to suppress the occurrence of damage to the compressor, thereby causing a relatively large number of constraints in controlling the appropriate high pressure capable of enhancing the operation efficiency of the apparatus.

The object is solved by the features of the independent claims. Preferred embodiments are provided in the dependent claims.

## BRIEF DESCRIPTION OF THE DRAWINGS

Embodiments will be described in detail with reference to the following drawings in which like reference numerals refer to like elements, and wherein:

FIG. 1 is a graph showing a change in refrigerating capacity according to a gas cooler outlet temperature of a supercritical refrigeration cycle apparatus in the related art;
FIG. 2 is a schematic diagram of a supercritical refrigeration cycle apparatus according to an embodiment;
FIG. 3 is a pressure-enthalpy diagram for the supercritical refrigeration cycle apparatus of FIG. 2;
FIG. 4 is a control block diagram of the supercritical refrigeration cycle apparatus of FIG. 2.
FIG. 5 is a schematic diagram of a supercritical refrigeration cycle apparatus according to another embodiment;
FIG. 6 is a control block diagram of the supercritical refrigeration cycle apparatus of FIG. 5;
FIG. 7 is a flow chart of a method for controlling a supercritical refrigeration cycle apparatus according to an embodiment; and
FIG. 8 is a flow chart of a method for controlling a supercritical refrigeration cycle apparatus according to another embodiment.

## DETAILED DESCRIPTION

Hereinafter, embodiments will be described in detail with reference to the accompanying drawings. Where possible, like reference numerals have been used to indicate like elements, and repetitive disclosure has been omitted. In describing the embodiments, detailed description will be omitted when a specific description for publicly known technologies to which the embodiments pertain is judged to obscure the gist.

Further, the accompanying drawings are used to help easily understand the technical idea of the embodiments and it should be understood that the idea of the present disclosure is not limited by the accompanying drawings. The idea of the present disclosure should be construed to extend to any alterations, equivalents, and substitutes besides the accompanying drawings.

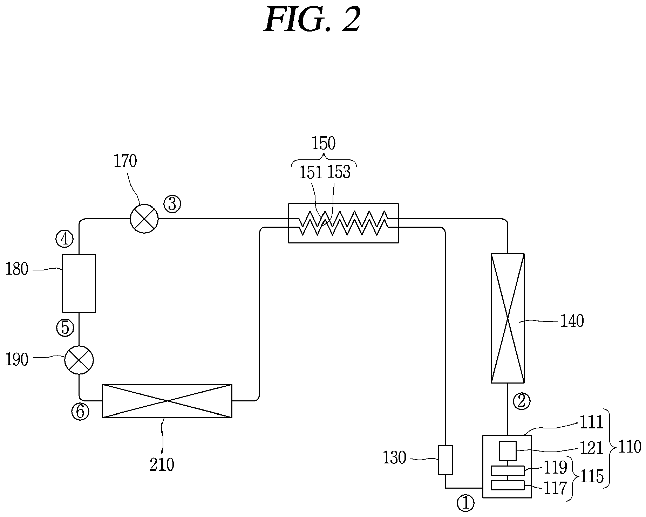

As illustrated in FIGS. 2 through 4, a supercritical refrigeration cycle apparatus according to an embodiment may include a compressor 110 configured to compress refrigerant in a supercritical state; a gas cooler 140

configured to cool the compressed refrigerant in a supercritical state; a pressure control electronic expansion valve 170 connected to the gas cooler 140 to control a pressure of refrigerant; a storage unit (receiver) 180 configured to temporarily store refrigerant which has passed through the pressure control electronic expansion valve; a flow control electronic expansion valve 190 connected to an outlet side of the receiver 180 to control a flow rate of refrigerant; an evaporator provided at an outlet-side pipe of the flow control electronic expansion valve 190; and a controller 250 configured to control the flow control electronic expansion valve 190 based on a suction superheat degree of refrigerant suctioned into the compressor 110 and a target suction superheat degree, and control the pressure control electronic expansion valve 170 based on a target operation high pressure and a current operation high pressure. The refrigerant may be carbon dioxide ($CO_2$), for example.

The compressor 110 may include an airtight container 111, a compression unit or device 115 provided within the airtight container 111, and a motor unit or motor 121 configured to provide a drive force to the compression unit 115, for example.

The compression unit 115 may include a low stage compression unit or device 117 configured to suction and compress the evaporated refrigerant and a high stage compression unit or device 119 configured to compress the refrigerant compressed in the low stage compression unit 117. The high stage compression unit 119 may be configured to compress the refrigerant at a pressure above a critical pressure of the refrigerant.

According to this embodiment, a case in which the compressor 110 is implemented as a two-stage compressor has been described; however, this is merely an example, and embodiments are not limited thereto.

An accumulator 130 configured to separate refrigerant into a gas and a liquid may be provided at a suction side of the compressor 110, for example. The gas cooler 140 may be connected to a discharge-side pipe of the compressor 110 to communicate therewith. The pressure control electronic expansion valve 170, which may be configured to reduce a pressure of refrigerant cooled in the gas cooler 140, for example, may be provided at an outlet-side pipe of the gas cooler 140.

The receiver 180 may be provided at an outlet side pipe of the pressure control electronic expansion valve 170. Refrigerant decompressed and expanded while passing through the pressure control electronic expansion valve 170 may be temporarily stored within the receiver 180.

The flow control electronic expansion valve 190, which may be configured to control a flow rate of refrigerant which has passed the receiver 180, for example, may be provided at an outlet-side pipe of the receiver 180. An evaporator 210, in which refrigerant may absorb and evaporate ambient latent heat, may be provided at an outlet-side pipe of the flow control electronic expansion valve 190.

An outlet-side pipe of the evaporator 210 may be connected to a suction side of the compressor 110 to communicate therewith. The outlet-side pipe of the evaporator 210 may be connected to the accumulator 130, for example.

Refrigerant which has passed through the evaporator 210 may exchange heat with refrigerant which has passed through the gas cooler 140. Due to this, a suction superheat degree of refrigerant suctioned into the compressor 110 may increase.

An outlet-side pipe of the evaporator 210 may be configured to exchange heat with an outlet-side pipe of the gas cooler 140. That is, an inter-refrigerant heat exchanger 150 or intermediate heat exchanger (hereinafter, referred to as "intermediate heat exchanger 150") configured to exchange heat between high-pressure refrigerant and low-pressure refrigerant may be provided at an outlet side of the gas cooler 140.

The intermediate heat exchanger 150 may include a first heat exchanger 151 configured to receive refrigerant which has passed through the gas cooler 140 and a second heat exchanger 153 configured to receive refrigerant which has passed the evaporator 210. The first heat exchanger 151 and second heat exchanger 153 may be configured to exchange heat, for example.

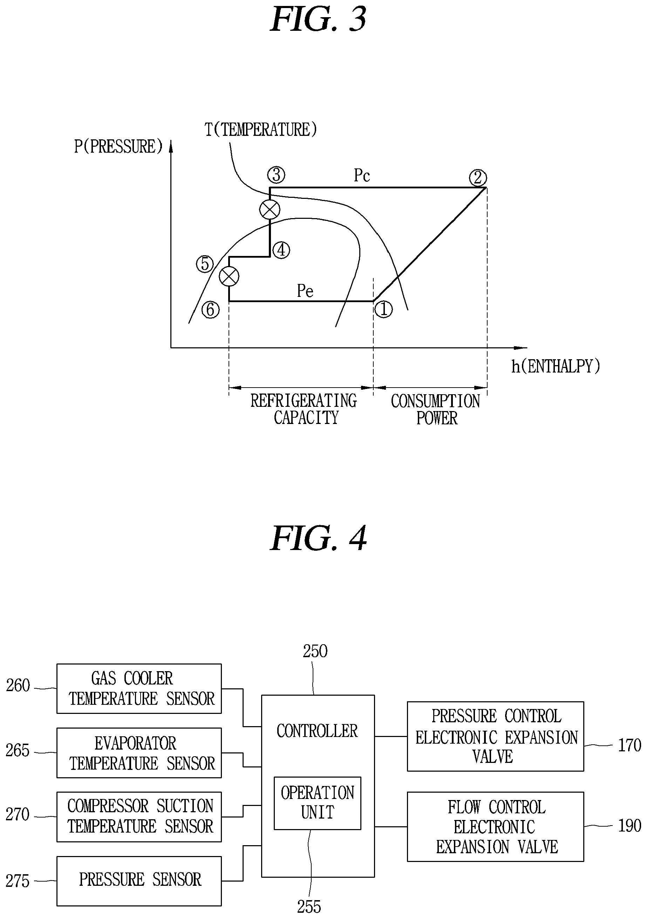

A supercritical refrigeration cycle apparatus according to this embodiment may include the controller 250 implemented with a microprocessor provided with a control program, as illustrated in FIG. 4, for example. The controller 250 may be configured to control the flow control electronic expansion valve 190 so as to decrease an opening degree of the flow control electronic expansion valve 190 when the suction superheat degree of the refrigerant is less than the target suction superheat degree, and increase an opening degree of the flow control electronic expansion valve 190 when the suction superheat degree of the refrigerant is greater than the target suction superheat degree.

The controller 250 may be configured to control the pressure control electronic expansion valve 170 so as to increase an opening degree of the pressure control electronic expansion valve 170 when the current operation high pressure is greater than the target operation high pressure, decrease the opening degree of the pressure control electronic expansion valve 170 when the current operation high pressure is less than the target operation high pressure, and maintain the opening degree of the pressure control electronic expansion valve 170 when the current operation high pressure is the same as the target operation high pressure.

The controller 250 may include a operation unit (calculation unit or calculator) 255 configured to calculate a suction superheat degree of refrigerant in the compressor 110, for example. A compressor suction temperature sensor 270 configured to sense a temperature of refrigerant suctioned into the compressor 110, an evaporator temperature sensor 265 configured to sense a temperature of refrigerant at an outlet side of the evaporator 210, a gas cooler temperature sensor 260 configured to sense an outlet temperature of the gas cooler 140, and a pressure sensor 275 configured to sense a current operation high pressure may all be connected to the controller 250 in a communicable manner. The pressure sensor 275 may be provided at an outlet side of the gas cooler 140, for example.

The operation unit 255 may be configured to compute the target operation high pressure ($P_{CT}$) from an outlet temperature ($T_C$) of the gas cooler 140 and an evaporation temperature ($T_E$) of the evaporator 210, for example. The target operation high pressure ($P_{CT}$) may be configured such that a ratio of a refrigerating capacity change rate to a power consumption change rate is a maximum (highest).

That is, the target operation high pressure (target pressure) may be calculated using Equation 1 below, for example.

[Equation 1]

$$P_{CT}=A*T_C+B*T_C*T_E+C,$$

where A, B, C are preset or predetermined constants, respectively, according to a system.

The operation unit 255 may subtract an outlet temperature of refrigerant in the evaporator 210 from a suction temperature of refrigerant in the compressor 110 to compute a suction superheat degree (= suction temperature - outlet temperature) of refrigerant in the compressor 110, for example. The controller 250 may be configured to control an opening degree of the flow control electronic expansion valve 190 to secure a suction superheat degree of the compressor 110 so as to suppress the occurrence of damage to the compressor 110 due to wet compression (liquid compression), and then control an opening degree of the pressure control electronic expansion valve 170 to maintain an appropriate operation high pressure so as to enhance the operation efficiency of the apparatus.

When an operation is started, low-pressure refrigerant may be suctioned into the compressor 110 and compressed at a pressure above a critical pressure and discharged in a supercritical state. The discharged refrigerant may be cooled by exchanging heat with air in the gas cooler 140.

Refrigerant which has passed through the gas cooler 140 may be decompressed while passing through the pressure control electronic expansion valve 170 via the intermediate heat exchanger 150. Refrigerant which has passed through the pressure control electronic expansion valve 170 may be introduced into the receiver 180, and refrigerant which has passed through the receiver 180 may be decompressed while passing through the flow control electronic expansion valve 190. Refrigerant which has passed through the flow control electronic expansion valve 190 may be introduced into the compressor 110 and evaporated by absorbing ambient latent heat.

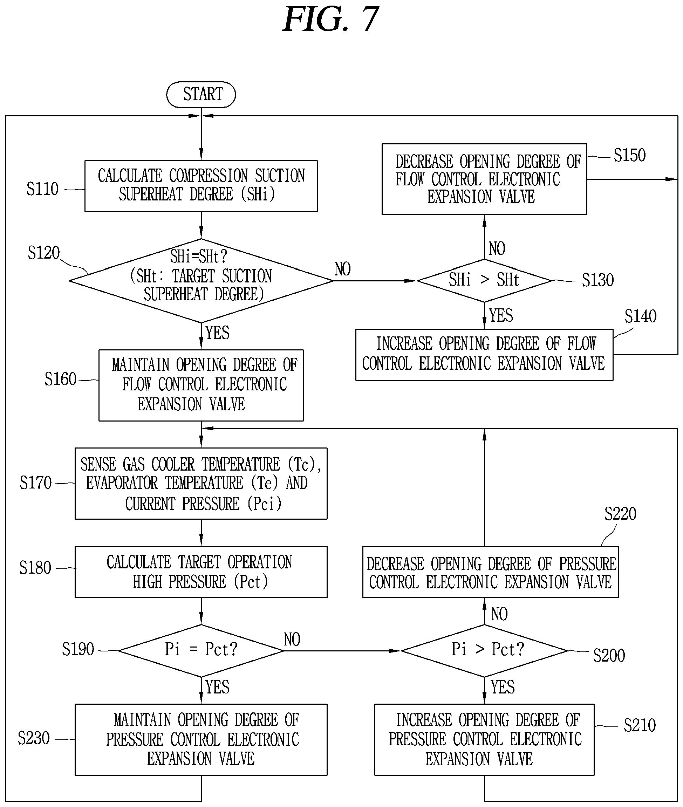

Hereinafter, a method for controlling a supercritical refrigeration cycle apparatus according to an embodiment will be described with reference to FIG. 7.

The operation unit 255 may calculate a suction superheat degree of refrigerant in the compressor 110 from a difference between a temperature sensed by the compressor suction temperature sensor 270 and a temperature sensed by the evaporator temperature sensor 265 (S110). The controller 250 may compare the calculated suction superheat degree and a target suction superheat degree to control an opening degree of the flow control electronic expansion valve 190 (S120). When the calculated suction superheat degree is the same as the target suction superheat degree (S110), the controller 250 may maintain a current opening degree of the flow control electronic expansion valve 190 (S160) and control an opening degree of the pressure control electronic expansion valve 170.

According to this embodiment, the target suction superheat degree may be set to prevent liquid refrigerant from being suctioned into the compressor 110, and thus, when the calculated suction superheat degree is maintained to be the same as the target suction superheat degree, the wet compression (liquid compression) of the compressor 110 may be prevented, enhancing reliability of the compressor 110. When the calculated suction superheat degree is greater than the target suction superheat degree (S130), the controller 250 may control the flow control electronic expansion valve 190 to increase an opening degree of the flow control electronic expansion valve 190 (S140).

Further, when the calculated suction superheat degree is less than the target suction superheat degree (S130), the controller 250 may control the flow control electronic expansion valve 190 to decrease an opening degree of the flow control electronic expansion valve 190 (S150). When the calculated suction superheat degree is the same as the target suction superheat degree (S120), the controller 250 may control the flow control electronic expansion valve 190 to maintain a current opening degree of the flow control electronic expansion valve 190 (S160), and control an opening degree of the pressure control electronic expansion valve 170.

On the other hand, the controller 250 may sense a gas cooler temperature and an evaporator temperature from the gas cooler temperature sensor 260 and the evaporator temperature sensor 265, respectively, and sense a current pressure by the pressure sensor 275 (S170). The operation unit 255 may compute a target operation high pressure using the gas cooler temperature and evaporator temperature based on the Equation 1 (S180).

When the target operation high pressure is computed, the controller 250 may compare the computed target operation high pressure with the current pressure (S190), and when the current pressure is the same as the target operation high pressure, the controller 250 may control the pressure control electronic expansion valve 170 to maintain a current opening degree of the pressure control electronic expansion valve 170 (S230). When the current pressure is greater than the target operation high pressure (S200), the controller 250 may control the pressure control electronic expansion valve 170 to increase an opening degree of the pressure control electronic expansion valve 170 (S210). When the current pressure is less than the target operation high pressure (S200), the controller 250 may control the pressure control electronic expansion valve 170 to decrease an opening degree of the pressure control electronic expansion valve 170 (S220).

According to this embodiment, the target operation high pressure may be set to maximize a ratio of the refrigerating capacity change rate to the power consumption change rate, and then, when the current pressure is maintained to be the same as the target operation high pressure, the operation efficiency may be enhanced.

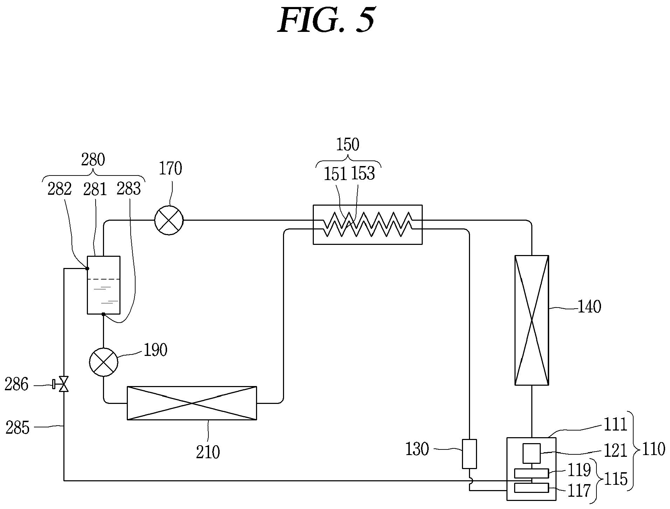

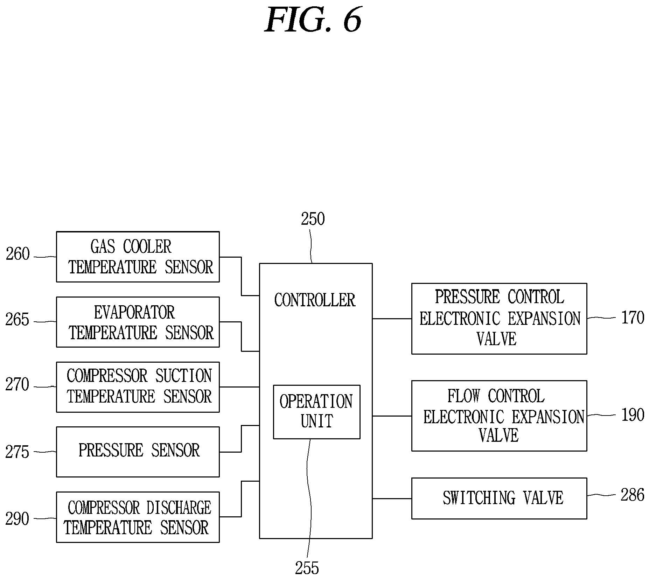

Hereinafter, a supercritical refrigeration cycle apparatus according to another embodiment will be described with reference to FIGS. 5 and 6.

As illustrated in FIGS. 5 and 6, a supercritical refrigeration cycle apparatus according to this embodiment may include compressor 110 configured to compress refrigerant in a supercritical state; gas cooler 140 configured to cool the compressed refrigerant; a pressure control electronic expansion valve 170 connected to the gas cooler 140 to control a pressure of refrigerant; a storage unit (phase separator) 280 configured to accommodate refrigerant which has passed through the pressure control electronic expansion valve to perform phase separation; a flow control electronic expansion valve 190 connected to an outlet side of the phase separator 280 to control a flow rate of refrigerant; an evaporator provided at an outlet-side pipe of the flow control electronic expansion valve 190; an injection pipe 285, one or a first end of which may be connected to the phase separator 280, and the other or a second end of which may be connected to the compressor 110 to provide gaseous refrigerant in the phase separator 280 to the compressor 110; a switching valve 286 configured to open or close the injection pipe 285; and controller 250 configured to control the flow control electronic expansion valve 190 based on a suction superheat degree of refrigerant suctioned into the compressor 110 and a target suction superheat degree, and control the pressure control electronic expansion valve 170 based on a target operation high pressure and a current operation high pressure, and control the switching valve 286 based on a compression ratio of the refrigerant and a refrigerant discharge temperature of the compressor 110. The refrigerant may be carbon dioxide ($CO_2$), for example.

The compressor 110 may include airtight container 111, compression unit or device 115 provided within the airtight container 111, and motor unit or motor 121 configured to provide a drive force to the compression unit 115, for example. The compression unit 115 may include low stage compression unit or device 117 and high stage compression unit or device 119.

Accumulator 130 may be provided at a suction side of the compressor 110. According to this embodiment, a case in which the accumulator 130 is provided at a suction side of the compressor 110 is illustrated, but it is merely an illustration, and the accumulator 130 may not be provided.

The gas cooler 140 may be connected to the discharge-side pipe of the compressor 110. Intermediate heat exchanger 150 may be provided at the outlet side of the gas cooler 140.

The pressure control electronic expansion valve 170 may be provided at the outlet side of the intermediate heat exchanger 150. The phase separator 280 may be connected to the outlet side of the pressure control electronic expansion valve 170.

The flow control electronic expansion valve 190 may be provided at one side of the phase separator 280. The evaporator 210 may be connected to the discharge side of the flow control electronic expansion valve 190. The phase separator 280 may be configured to allow refrigerant decompressed while passing through the pressure control electronic expansion valve 170, for example, to be introduced and separated into gaseous liquid (a gas and a liquid).

The phase separator 280 may include a case 281 configured to form an accommodation space therein and a first outlet 282 configured to discharge gaseous refrigerant within the case 281, for example. The phase separator 280 may further include a second outlet 283 configured to discharge liquid refrigerant within the case 281, for example. One or a first end of a pipe may be connected to the evaporator 210, and the other or a second end thereof may be connected the second outlet 283.

One or a first end of the injection pipe 285 may be connected to the compressor 110, and the other or a second end thereof may be connected to the first outlet 282, for example. Due to this, gaseous refrigerant within the phase separator 280 may be provided to the compressor 110.

The injection pipe 285 may be configured to provide gaseous refrigerant in the phase separator 280 to a suction side of the high stage compression unit 119 of the compressor 110. The switching valve 286 may be provided at the injection pipe 285 to open or close a passage of the injection pipe 285.

This embodiment may be configured to include the controller 250 implemented as a microprocessor provided with a control program, for example. The flow control electronic expansion valve 190, the pressure control electronic expansion valve 170, and the switching valve 286 may be respectively connected to the controller 250 in a controlled manner, as illustrated in FIG. 6. The controller 250 may include the operation unit 255 configured to compute a refrigerant suction superheat degree and a target operation high pressure (target pressure) of the compressor 110.

Gas cooler temperature sensor 260 configured to sense a temperature of the gas cooler 140 evaporator temperature sensor 265 configured to sense the evaporator temperature, compressor suction temperature sensor 270 configured to sense a temperature of refrigerant suctioned into the compressor 110, a compressor discharge temperature sensor 290 configured to sense a temperature of refrigerant discharged from the compressor 110 may be connected to the controller 250, and pressure sensor 275 configured to sense a current pressure (high pressure) of the refrigerant may each be connected to the controller 250.

The operation unit 255 may be configured to subtract an outlet temperature of the evaporator 210 from a refrigerant suction temperature of the compressor 110 to calculate a refrigerant suction superheat degree of the compressor 110. The operation unit 255 may be configured to compute a target operation high pressure using Equation 1 as described above.

The operation unit 255 may be configured to compute a ratio (compression ratio) of an operation high pressure of refrigerant to an operation low pressure, for example. The operation high pressure may denote a pressure of high-pressure refrigerant from a discharge-side pipe of the compressor 110 prior to introduction to the pressure control electronic expansion valve 170, for example.

The operation high pressure may be a pressure value sensed by the pressure sensor 275 provided in the gas cooler 140, for example. The operation high pressure may be a pressure value converted from a temperature of the gas cooler 140.

The operation low pressure may be a pressure value of low-pressure refrigerant from a discharge side of the flow control electronic expansion valve 190 prior to the suction of the compressor 110, for example. The operation low pressure may be a pressure value converted from a temperature sensed from the evaporator temperature sensor 265, for example. The operation low pressure may be a pressure value sensed by a pressure sensor (not shown) configured to sense a pressure of the evaporator 210, for example.

The controller 250 may decrease an opening degree of the flow control electronic expansion valve 190 when the suction superheat degree of the refrigerant is less than the target suction superheat degree, increase an opening degree of the flow control electronic expansion valve 190 when the suction superheat degree of the refrigerant is greater than the target suction superheat degree, and maintain a current opening degree of the flow control electronic expansion valve 190 when the suction superheat degree of the refrigerant is the same as the target suction superheat degree. In this way, a suction superheat degree of refrigerant suctioned into the compressor 110 may be appropriately maintained to suppress the occurrence of damage to the compressor 110 due to wet compression (liquid compression), thereby enhancing reliability of the compressor 110.

The controller 250 may control the pressure control electronic expansion valve 170 to increase an opening degree of the pressure control electronic expansion valve 170 when the current operation high pressure is greater than the target operation high pressure, decrease an opening degree of the pressure control electronic expansion valve 170 when the current operation high pressure is less than the target operation high pressure, and maintain an opening degree of the pressure control electronic expansion valve 170 when the current operation high pressure is the same as the target operation high pressure. In this way, a ratio of a refrigerating capacity change rate to a consumption power change rate may be maximized to enhance an operation efficiency of the supercritical refrigeration cycle apparatus according to this embodiment.

On the other hand, the controller 250 may be configured to control the switching valve 286 to open a passage of the injection pipe 285 so as to provide refrigerant in the phase separator 280 to the compressor 110 when a ratio of the operation high pressure of the refrigerant to the operation low pressure, namely, the compression ratio of the refrigerant, is above a set or predetermined value or the discharge temperature of the compressor 110 is above a set or predetermined temperature. Gaseous refrigerant in the phase separator 280 may be provided to the compressor 110 to reduce a temperature of the refrigerant, thereby decreasing a work (load) of the compressor 110 (actually, the high stage compression unit 119).

When the operation of the supercritical refrigeration cycle apparatus according to this embodiment is started, the compressor 110 may suction and compress low-pressure refrigerant in a supercritical state and discharge it to the gas cooler 140. Refrigerant cooled in the gas cooler 140 may be decompressed while passing through the flow control electronic expansion valve 190 via the intermediate heat exchanger 150.

The refrigerant which has passed through the flow control electronic expansion valve 190 may be introduced into the phase separator 280, and phase-separated into a gas and a liquid. The liquid refrigerant of the phase separator 280 may be discharged through the second outlet 283 and decompressed while passing through the flow control electronic expansion valve 190. The refrigerant which has passed through the flow control electronic expansion valve 190 may be evaporated by absorbing latent heat while passing through the evaporator 210.

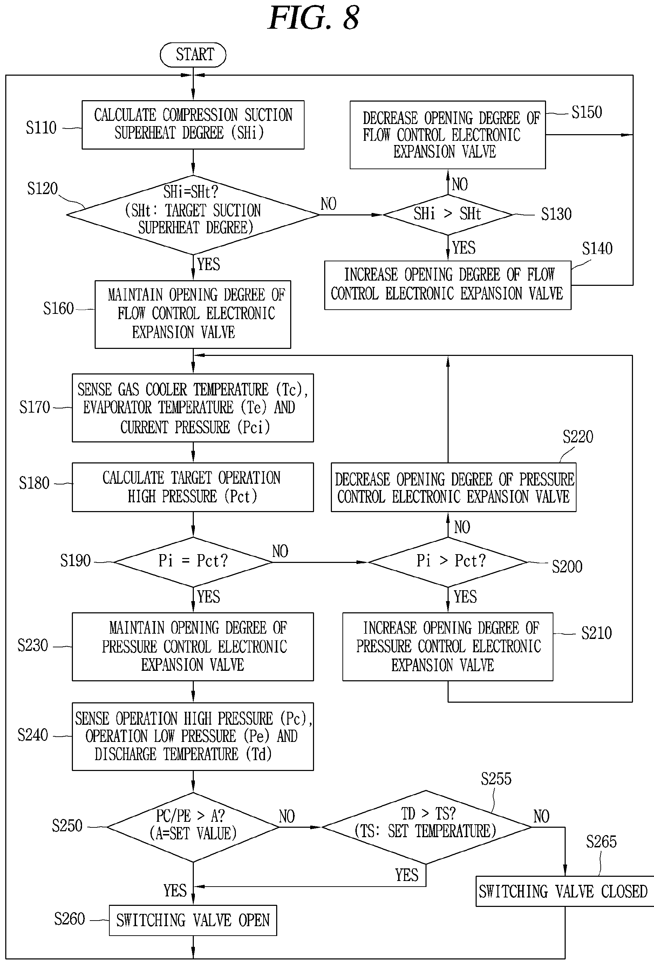

Hereinafter, a method of controlling a supercritical refrigeration cycle apparatus according to another embodiment will be described with reference to FIG. 8.

The controller 250 may control the operation unit 255 to calculate a suction superheat degree of refrigerant in the compressor 110 (S110). The controller 250 may determine whether the suction superheat degree of the refrigerant is the same as a target suction superheat degree (S120).

When the suction superheat degree of the refrigerant is greater than the target suction superheat degree (S130), the controller 250 may control the flow control electronic expansion valve 190 to increase an opening degree of the flow control electronic expansion valve 190 (S140). When the suction superheat degree of the refrigerant is less than the target suction superheat degree (S130), the controller 250 may control the flow control electronic expansion valve 190 to decrease an opening degree of the flow control electronic expansion valve 190 (S150).

The controller 250 may repeatedly perform an opening degree control process of the flow control electronic expansion valve 190, and control the flow control electronic expansion valve 190 to maintain a current opening degree of the flow control electronic expansion valve 190 (S160) when the suction superheat degree is the same as the target suction superheat degree (S120). When the current opening degree of the flow control electronic expansion valve 190 is maintained (S160), the controller 250 may perform the control of the pressure control electronic expansion valve 170.

The controller 250 may sense the gas cooler temperature, the evaporator temperature, and a current pressure through the gas cooler temperature sensor 260, the evaporator temperature sensor 265, and the pressure sensor (S170). The controller 250 may control the operation unit 255 to calculate a target operation high pressure (S180).

The controller 250 may compare the current pressure with the target operation high pressure (S190), and control the pressure control electronic expansion valve 170 to increase an opening degree of the pressure control electronic expansion valve 170 (S210) when the current pressure is greater than the target operation high pressure (S200). When the current pressure is less than the target operation high pressure (S200), the controller 250 may control the pressure control electronic expansion valve 170 to decrease an opening degree of the pressure control electronic expansion valve 170 (S220).

The controller 250 may repeat the control process of the pressure control electronic expansion valve 170, and control the pressure control electronic expansion valve 170 to maintain a current opening degree of the pressure control electronic expansion valve 170 (S230) when the current pressure is the same as the target operation high pressure (S190).

On the other hand, the controller 250 may sense an operation high pressure, an operation low pressure of the refrigerant, and a discharge temperature of the compressor 110 (S240), and control the operation unit 255 to compute a compression ratio of the refrigerant (S250). The controller 250 may compare the compression ratio with a set or predetermined value (S250), and control the switching valve 286 to open a passage of the injection pipe 285 when the compression ratio exceeds the set or predetermined value (S260).

Further, when a refrigerant discharge temperature of the compressor 110 exceeds a set or predetermined temperature (S255), the controller 250 may control the switching valve 286 to open a passage of the injection pipe 285 (S260). When the passage of the injection pipe 285 is open, gaseous refrigerant within the phase separator 280 may move along a passage of the injection pipe 285 to be provided to the compressor 110. When the refrigerant discharge temperature of the compressor 110 does not exceed the set or predetermined temperature (S255), the controller 250 may control the switching valve 286 to close the passage of the injection pipe 285 (S265).

That is, gaseous refrigerant moved along the injection pipe 285 may be introduced to a suction side of the high stage compression unit 119 of the compressor 110, and mixed with refrigerant discharged from the low stage compression unit 117 and suctioned to a suction side of the high stage compression unit 119. Gaseous refrigerant in the receiver 180 may have a relatively low temperature, and then when the gaseous refrigerant is mixed with refrigerant compressed in the low stage compression unit 117, a temperature of refrigerant suctioned into the high stage compression unit 119 may be significantly lower compared to a temperature of refrigerant discharged from the low stage compression unit 117. In this way, a load of the high stage compression unit 119 of the compressor 110 may be significantly reduced.

With a supercritical refrigeration cycle apparatus and a method for controlling a supercritical refrigeration cycle apparatus in accordance with this embodiment, a suction superheat degree of refrigerant suctioned into the compressor 110 through control of the flow control electronic expansion valve 190 may be appropriately secured to suppress the occurrence of wet compression in the compressor 110, thereby enhancing reliability of the compressor 110. Further, a ratio of a refrigerating capacity change rate to a power consumption change rate may be appropriately managed (maximized) through control of the pressure control electronic expansion valve 170, thereby enhancing operation efficiency. Furthermore, when a compression ratio of the refrigerant exceeds a set or predetermined value or a discharge temperature of the compressor 110 is above a set or predetermined temperature, gaseous refrigerant in the phase separator 280 may be provided to the compressor 110 to alleviate a load (work) of the compressor 110, thereby further enhancing operation efficiency.

As described above, according to an embodiment, a pressure control electronic expansion valve connected to a gas cooler to control a pressure of refrigerant, a receiver configured to temporarily store refrigerant which has passed through the pressure control electronic expansion valve, and a flow control electronic expansion valve connected to an outlet side of the receiver to control a flow rate of refrigerant may be provided, thereby implementing flow control and pressure control of the refrigerant in a respectively separate manner. In this way, it may be possible to enhance reliability of the compressor as well as enhance refrigerating capacity.

In addition, a pressure control electronic expansion valve, a phase separator configured to accommodate refrigerant which has passed through the pressure control electronic expansion valve to perform phase separation, a flow control electronic expansion valve connected to an outlet side of the phase separator to control a flow rate of refrigerant, an injection pipe, one or a first end of which may be connected to the phase separator, and the other or a second end of which may be connected to the compressor to provide gaseous refrigerant in the phase separator to the compressor, and a switching valve configured to open or close the injection pipe may be provided therein to implement flow control and pressure control of the refrigerant in a respectively separate manner, as well as provide gaseous refrigerant within the phase separator to the compressor so as to reduce a load of the compressor, thereby reducing power consumption.

Accordingly, embodiments disclosed herein provide a supercritical refrigeration cycle apparatus and a method for controlling a supercritical refrigeration cycle apparatus capable of implementing flow control and pressure control of refrigerant in a respectively separate manner. Further, embodiments disclosed herein provide a supercritical refrigeration cycle apparatus and a method for controlling a supercritical refrigeration cycle apparatus thereof capable of controlling flow control and pressure control of refrigerant in a separate manner, as well as reducing a temperature of refrigerant in the compressor to decrease load.

Embodiments disclosed herein provide a supercritical refrigeration cycle apparatus that may include a compressor configured to compress refrigerant in a supercritical state; a gas cooler configured to cool the compressed refrigerant in a supercritical state; a pressure control electronic expansion valve connected to the gas cooler to control a pressure of refrigerant; a receiver configured to temporarily store refrigerant which has passed through the pressure control electronic expansion valve; a flow control electronic expansion valve connected to an outlet side of the receiver to control a flow rate of refrigerant; evaporator provided at an outlet-side pipe of the flow control electronic expansion valve; and a controller configured to control the flow control electronic expansion valve based on a suction superheat degree of refrigerant suctioned into the compressor and a target suction superheat degree, and control the pressure control electronic expansion valve based on a target operation high pressure and a current operation high pressure. The controller may decrease an opening degree of the flow control electronic expansion valve when the suction superheat degree of the refrigerant is less than the target suction superheat degree, and increase an opening degree of the flow control electronic expansion valve when the suction superheat degree of the refrigerant is greater than the target suction superheat degree. The controller may increase an opening degree of the pressure control electronic expansion valve when the current operation high pressure is greater than the target operation high pressure, and decrease an opening degree of the pressure control electronic expansion valve when the current operation high pressure is less than the target operation high pressure, and maintain an opening degree of the pressure control electronic expansion valve when they are the same.

The supercritical refrigeration cycle apparatus may further include an intermediate heat exchanger in which refrigerant which has passed through the gas cooler and refrigerant which has passed through the evaporator exchange heat with each other.

Embodiments disclosed herein further provide a supercritical refrigeration cycle apparatus that may include a compressor configured to compress refrigerant in a supercritical state; a gas cooler configured to cool the compressed refrigerant; a pressure control electronic expansion valve connected to the gas cooler to control a pressure of refrigerant; a phase separator configured to accommodate refrigerant which has passed through the pressure control electronic expansion valve to perform phase separation; a flow control electronic expansion valve connected to an outlet side of the phase separator to control a flow rate of refrigerant; an evaporator provided at an outlet-side pipe of the flow control electronic expansion valve; an injection pipe, one or a first end of which may be connected to the phase separator, and the other or a second end of which may be connected to the compressor to provide gaseous refrigerant in the phase separator to the compressor; a switching valve configured to open or close the injection pipe; and a controller configured to control the flow control electronic expansion valve based on a suction superheat degree of refrigerant suctioned into the compressor and a target suction superheat degree, and control the pressure control electronic expansion valve based on a target operation high pressure and a current operation high pressure, and control the switching valve based on a compression ratio of the refrigerant and a refrigerant discharge temperature of the compressor. The controller may decrease an opening degree of the flow control electronic expansion valve when the suction superheat degree of the refrigerant is less than the target suction superheat degree, and increase an opening degree of the flow control electronic expansion valve when the suction superheat degree of the refrigerant is greater than the target suction superheat degree. The controller may increase an opening degree of the pressure control electronic expansion valve when a current operation high pressure is greater than the target operation high pressure, decrease an opening degree of the pressure control electronic expansion valve when the current operation high pressure is less than the target operation high pressure, and maintain an opening degree of the pressure control electronic expansion valve when the current operation high pressure is the same as the target operation high pressure.

The supercritical refrigeration cycle apparatus may further include an intermediate heat exchanger in which refrigerant which has passed through the gas cooler and refrigerant which has passed through the evaporator exchange heat with each other.

The controller may control the switching valve to open the injection pipe so as to provide refrigerant in the phase separator to the compressor when the compression ratio is above a set or predetermined value, and the discharge temperature of the compressor is above a set or predetermined temperature.

Embodiments disclosed herein further provide a method for controlling a supercritical refrigeration cycle apparatus including a compressor configured to compress refrigerant; a gas cooler configured to cool the compressed refrigerant in a supercritical state; a pressure control electronic expansion valve connected to the gas cooler to control a pressure of refrigerant; a receiver configured to temporarily store refrigerant which has passed through the pressure control electronic expansion valve; a flow control electronic expansion valve connected to an outlet side of the receiver to control a flow rate of refrigerant; and an evaporator provided at an outlet-side pipe of the flow control electronic expansion valve. The method may include controlling an opening degree of the flow control electronic expansion valve based on a suction superheat degree of refrigerant in the compressor; and/or controlling an opening degree of the pressure control electronic expansion valve based on an operation high pressure of the refrigerant.

The controlling the opening degree of the flow control electronic expansion valve may include checking a suction superheat degree of refrigerant in the compressor; comparing the suction superheat degree of the compressor with a target suction superheat degree, and maintaining a current opening degree of the flow control electronic expansion valve when the suction superheat degree of the compressor is the same as the target suction superheat degree. The method may further include increasing an opening degree of the flow control electronic expansion valve when the suction superheat degree of the compressor is greater than the target suction superheat degree, and decreasing an opening degree of the flow control electronic expansion valve when the suction superheat degree is less than the target suction superheat degree.

When the suction superheat degree of the compressor is the same as the target suction superheat degree, maintaining a current opening degree of the flow control electronic expansion valve, and then controlling an opening degree of the pressure control electronic expansion valve may be carried out. The controlling the opening degree of the pressure control electronic expansion valve may include checking an outlet temperature of the gas cooler and an evaporation temperature of the evaporator, respectively; calculating a target operation high pressure using the outlet temperature of the gas cooler and the evaporation temperature of the evaporator, and calculating a current operation high pressure corresponding to the outlet temperature of the gas cooler; comparing the target operation high pressure with the current operation high pressure; and maintaining a current opening degree of the pressure control electronic expansion valve when the current operation high pressure is the same as the target operation high pressure. The method may further include increasing an opening degree of the pressure control electronic expansion valve when the current operation high pressure is greater than the target operation high pressure, and decreasing an opening degree of the pressure control electronic expansion valve when the current operation high pressure is less than the target operation high pressure.

Embodiments disclosed herein also provide a method for controlling a supercritical refrigeration cycle apparatus including a compressor configured to compress refrigerant; a gas cooler configured to cool the compressed refrigerant in a supercritical state; a pressure control electronic expansion valve connected to the gas cooler to control a pressure of refrigerant; a phase separator configured to accommodate refrigerant which has passed through the pressure control electronic expansion valve to perform phase separation; a flow control electronic expansion valve connected to an outlet side of the phase separator to control a flow rate of refrigerant; an evaporator provided at an outlet-side pipe of the flow control electronic expansion valve; an injection pipe, one or a first end of which may be connected to the phase separator, and the other or a second end of which may be connected to the compressor to provide gaseous refrigerant in the phase separator to the compressor; and a switching valve configured to open or close the injection pipe. The method may include controlling an opening degree of the flow control electronic expansion valve based on a suction superheat degree of the compressor; and/or controlling an opening degree of the pressure control electronic expansion valve based on an operation high pressure of the refrigerant; and controlling the switching valve based on a compression ratio of the refrigerant and a refrigerant discharge temperature of the compressor.

The controlling the switching valve may include controlling the switching valve to open the injection pipe so as to provide refrigerant in the phase separator to the compressor when the compression ratio is above a set or predetermined value, and a discharge temperature of the compressor is above a set or predetermined temperature. When the suction superheat degree of the compressor is the same as the target suction superheat degree, maintaining a current opening degree of the flow control electronic expansion valve, and controlling an opening degree of the pressure control electronic expansion valve may be carried out.

The controlling an opening degree of the flow control electronic expansion valve may include checking a suction superheat degree of refrigerant in the compressor; comparing the suction superheat degree of the compressor with a target suction superheat degree; maintaining a current opening degree of the flow control electronic expansion valve when the suction superheat degree of the compressor is the same as the target suction superheat degree, and increasing an opening degree of the flow control electronic expansion valve when the suction superheat degree of the compressor is greater than the target suction superheat degree, and decreasing an opening degree of the flow control electronic expansion valve when the suction superheat degree of the compressor is less than the target suction superheat degree. The controlling the opening degree of the pressure control electronic expansion valve may include checking an outlet temperature of the gas cooler and an evaporation temperature of the evaporator, respectively; calculating a target operation high pressure using the outlet temperature of the gas cooler and the evaporation temperature of the evaporator, and calculating a current operation high pressure corresponding to the outlet temperature of the gas cooler; comparing the target operation high pressure with the current operation high pressure; and maintaining a current opening degree of the pressure control electronic expansion valve when the current operation high pressure is the same as the target operation high pressure, and increasing an opening degree of the pressure control electronic expansion valve when the current operation high pressure is greater than the target operation high pressure, and decreasing an opening degree of the pressure control electronic expansion valve when the current operation high pressure is less than the target operation high pressure.

It is obvious to those skilled in the art that embodiments may be embodied in other specific forms without departing from the concept and essential characteristics thereof. The detailed description is, therefore, not to be construed as illustrative in all respects but considered as restrictive. The scope of the invention should be determined by reasonable interpretation of the appended claims and all changes that come within the equivalent scope are included in the scope.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A supercritical refrigeration cycle apparatus, comprising:

> a compressor (110) configured to compress a refrigerant in a supercritical state;
> a gas cooler (140) configured to cool the compressed refrigerant;
> a pressure control electronic expansion valve (170) connected to the gas cooler (140) to control a pressure of the refrigerant;
> a storage unit (180) configured to temporarily store the refrigerant which has passed through the pressure control electronic expansion valve (170);
> a flow control electronic expansion valve (190) connected to an outlet side of the storage unit (180) to control a flow rate of the refrigerant;
> an evaporator (210) provided at an outlet-side pipe of the flow control electronic expansion valve (190); and
> a controller (250) configured to control the flow control electronic expansion valve (190) based on a suction superheat degree of refrigerant suctioned into the compressor (110) and a target suction superheat degree, and to control the pressure control electronic expansion valve (170) based on a target operation high pressure and a current operation high pressure.

2. The supercritical refrigeration cycle apparatus of claim 1, wherein the controller (250) is adapted to decrease an opening degree of the flow control electronic expansion valve (190) when the suction superheat degree of the refrigerant is less than the target suction superheat degree, and to increase the opening degree of the flow control electronic expansion valve (190) when the suction superheat degree of the refrigerant is greater than the target suction superheat degree.

3. The supercritical refrigeration cycle apparatus of claim 1 or 2, wherein the controller (250) is adapted to increase an opening degree of the pressure control electronic expansion valve (170) when the current operation high pressure is greater than the target operation high pressure, to decrease the opening degree of the pressure control electronic expansion valve (170) when the current operation high pressure is less than the target operation high pressure, and to maintain the opening degree of the pressure control electronic expansion valve (170) when they are the same.

4. The supercritical refrigeration cycle apparatus of any one of claims 1 to 3, further including an intermediate heat exchanger (150) in which refrigerant which has passed through the gas cooler (140) and refrigerant which has passed through the evaporator (210) exchange heat with each other.

5. The supercritical refrigeration cycle apparatus of any one of claims 1 to 4, further including:

an injection pipe (285), a first end of which is connected to the storage unit (180) and a second end of which is connected to the compressor (110) to provide gaseous refrigerant in the storage unit to the compressor (110); and
a switching valve (286) configured to open or close the injection pipe (285).

6. The supercritical refrigeration cycle apparatus of claim 5, wherein the controller (250) is adapted to control the switching valve (286) to open the injection pipe (285) so as to provide refrigerant in the storage unit (180) to the compressor (110) when the compression ratio is above a predetermined value and/or the discharge temperature of the compressor (110) is above a predetermined temperature.

7. A method for controlling a supercritical refrigeration cycle apparatus of any one of claims 1 to 6, the method comprising:

controlling (S140, S150, S160) an opening degree of the flow control electronic expansion valve (190) based on a suction superheat degree of refrigerant in the compressor (110); and/or
controlling (S210, S220, S230) an opening degree of the pressure control electronic expansion valve (170) based on an operation high pressure of the refrigerant.

8. The method of claim 7, wherein the controlling of the opening degree of the flow control electronic expansion valve (190) includes:

checking (S120) a suction superheat degree of the refrigerant in the compressor (110);
comparing (S130) the suction superheat degree of the compressor (110) with a target suction superheat degree; and
maintaining (S160) a current opening degree of the flow control electronic expansion valve (190) when the suction superheat degree of the compressor (110) is the same as the target suction superheat degree.

9. The method of claim 7 or 8, further including: increasing (S140) the opening degree of the flow control electronic expansion valve (190) when the suction superheat degree of the compressor (110) is greater than the target suction superheat degree and decreasing (S150) the opening degree of the flow control electronic expansion valve (190) when the suction superheat degree is less than the target suction superheat degree.

10. The method of claim 8 or 9, wherein when the suction superheat degree of the compressor is the same as the target suction superheat degree, maintaining (S160) a current opening degree of the flow control electronic expansion valve (190), and then controlling (S210, S220, S230) the opening degree of the pressure control electronic expansion valve (170).

11. The method of any one of claims 8 to 10, wherein the controlling of the opening degree of the pressure control electronic expansion valve (170) includes:

sensing (S170) an outlet temperature of the gas cooler (140) and an evaporation temperature of the evaporator (210), respectively;
calculating (S180) a target operation high pressure using the outlet temperature of the gas cooler (140) and the evaporation temperature of the evaporator (210), and calculating a current operation high pressure corresponding to the outlet temperature of the gas cooler (140);
comparing (S190) the target operation high pressure with the current operation high pressure; and
maintaining a (S230) current opening degree of the pressure control electronic expansion valve (170) when the current operation high pressure is the same as the target operation high pressure.

12. The method of claim 11, further including:

increasing (S210) the opening degree of the pressure control electronic expansion valve (170) when the current operation high pressure is greater than the target operation high pressure; and/or
decreasing (S220) the opening degree of the pressure control electronic expansion valve (170) when the current operation high pressure is less than the target operation high pressure.

13. The method as claimed in any one of the preceding claims, further comprising: controlling (S260) the switching valve (286) based on a compression ratio of the refrigerant and a refrigerant discharge temperature of the compressor (110).

**14.** The method of claim 13, wherein the controlling (S260) of the switching valve (285) controls the switching valve (285) to open the injection pipe (285) so as to provide the refrigerant in the storage unit (180) to the compressor (110) when the compression ratio is above a predetermined value, and/or the discharge temperature of the compressor (110) is above a predetermined temperature.

## FIG. 1

# FIG. 2

## FIG. 3

## FIG. 4

# FIG. 5

# FIG. 6

| | | |
|---|---|---|
| 260 — GAS COOLER TEMPERATURE SENSOR | | |
| 265 — EVAPORATOR TEMPERATURE SENSOR | | |
| 270 — COMPRESSOR SUCTION TEMPERATURE SENSOR | | |
| 275 — PRESSURE SENSOR | | |
| 290 — COMPRESSOR DISCHARGE TEMPERATURE SENSOR | | |

250

CONTROLLER

OPERATION UNIT

255

PRESSURE CONTROL ELECTRONIC EXPANSION VALVE — 170

FLOW CONTROL ELECTRONIC EXPANSION VALVE — 190

SWITCHING VALVE — 286

# FIG. 7

START

S110 — CALCULATE COMPRESSION SUCTION SUPERHEAT DEGREE (SHi)

S120 — SHi=SHt? (SHt: TARGET SUCTION SUPERHEAT DEGREE) — NO → SHi > SHt? — S130

NO → DECREASE OPENING DEGREE OF FLOW CONTROL ELECTRONIC EXPANSION VALVE — S150

YES → INCREASE OPENING DEGREE OF FLOW CONTROL ELECTRONIC EXPANSION VALVE — S140

YES ↓

S160 — MAINTAIN OPENING DEGREE OF FLOW CONTROL ELECTRONIC EXPANSION VALVE

S170 — SENSE GAS COOLER TEMPERATURE (Tc), EVAPORATOR TEMPERATURE (Te) AND CURRENT PRESSURE (Pci)

S180 — CALCULATE TARGET OPERATION HIGH PRESSURE (Pct)

S190 — Pi = Pct? — NO → Pi > Pct? — S200

NO → DECREASE OPENING DEGREE OF PRESSURE CONTROL ELECTRONIC EXPANSION VALVE — S220

YES → INCREASE OPENING DEGREE OF PRESSURE CONTROL ELECTRONIC EXPANSION VALVE — S210

YES ↓

S230 — MAINTAIN OPENING DEGREE OF PRESSURE CONTROL ELECTRONIC EXPANSION VALVE

# FIG. 8

START

S110 — CALCULATE COMPRESSION SUCTION SUPERHEAT DEGREE (SHi)

S150 — DECREASE OPENING DEGREE OF FLOW CONTROL ELECTRONIC EXPANSION VALVE

S120 — SHi=SHt? (SHt: TARGET SUCTION SUPERHEAT DEGREE) — NO

NO

S130 — SHi > SHt

YES

S140 — INCREASE OPENING DEGREE OF FLOW CONTROL ELECTRONIC EXPANSION VALVE

YES

S160 — MAINTAIN OPENING DEGREE OF FLOW CONTROL ELECTRONIC EXPANSION VALVE

S170 — SENSE GAS COOLER TEMPERATURE (Tc), EVAPORATOR TEMPERATURE (Te) AND CURRENT PRESSURE (Pci)

S220 — DECREASE OPENING DEGREE OF PRESSURE CONTROL ELECTRONIC EXPANSION VALVE

S180 — CALCULATE TARGET OPERATION HIGH PRESSURE (Pct)

NO

S190 — Pi = Pct? — NO

S200 — Pi > Pct?

YES

S230 — MAINTAIN OPENING DEGREE OF PRESSURE CONTROL ELECTRONIC EXPANSION VALVE

YES

S210 — INCREASE OPENING DEGREE OF PRESSURE CONTROL ELECTRONIC EXPANSION VALVE

S240 — SENSE OPERATION HIGH PRESSURE (Pc), OPERATION LOW PRESSURE (Pe) AND DISCHARGE TEMPERATURE (Td)

S255

S250 — PC/PE > A? (A=SET VALUE) — NO

TD > TS? (TS: SET TEMPERATURE) — NO

S265 — SWITCHING VALVE CLOSED

YES

YES

S260 — SWITCHING VALVE OPEN

Europäisches
Patentamt

European
Patent Office

Office européen
des brevets

# EUROPEAN SEARCH REPORT

Application Number

EP 17 17 9502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/112411 A1 (CARRIER CORP [US]; LIU LUCY YI [US]; DURAISAMY SURESH [US]; HOFSDAL GI) 15 September 2011 (2011-09-15) | 1-5,7-12 | INV.<br>F25B9/00<br>F25B49/02 |
| Y | * paragraph [0008] - paragraph [0051]; figures 1-4 *<br>* paragraphs [0030], [0038] *<br>----- | 6,13,14 | ADD.<br>F25B1/10<br>F25B40/00 |
| Y | EP 1 647 783 A2 (MITSUBISHI ELECTRIC CORP [JP]) 19 April 2006 (2006-04-19)<br>* paragraph [0028]; figure 1 *<br>----- | 6,13,14 | |
| A | WO 2008/130357 A1 (CARRIER CORP [US]; MITRA BISWAJIT [US]; CHEN YU H [US]; SCARCELLA JASO)<br>30 October 2008 (2008-10-30)<br>* paragraph [0033] *<br>----- | 6,13,14 | |
| A | WO 2008/039204 A1 (CARRIER CORP [US]; BUSH JAMES W [US]; BEAGLE WAYNE P [US]; MITRA BISWA) 3 April 2008 (2008-04-03)<br>* paragraph [0032] *<br>----- | 3,7,10 | |

TECHNICAL FIELDS
SEARCHED    (IPC)

F25B

The present search report has been drawn up for all claims

| Place of search | Date of completion of the search | Examiner |
|---|---|---|
| Munich | 8 January 2018 | Szilagyi, Barnabas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 17 9502

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2018

| Patent document cited in search report | | | Publication date | Patent family member(s) | | | Publication date |
|---|---|---|---|---|---|---|---|
| WO 2011112411 | A1 | | 15-09-2011 | CN | 102782424 | A | 14-11-2012 |
| | | | | DK | 2545331 | T3 | 27-11-2017 |
| | | | | EP | 2545331 | A1 | 16-01-2013 |
| | | | | SG | 183386 | A1 | 27-09-2012 |
| | | | | US | 2012318006 | A1 | 20-12-2012 |
| | | | | WO | 2011112411 | A1 | 15-09-2011 |
| EP 1647783 | A2 | | 19-04-2006 | EP | 1647783 | A2 | 19-04-2006 |
| | | | | EP | 2119982 | A2 | 18-11-2009 |
| | | | | EP | 2119983 | A2 | 18-11-2009 |
| | | | | EP | 2119984 | A2 | 18-11-2009 |
| | | | | EP | 2224187 | A2 | 01-09-2010 |
| | | | | JP | 4459776 | B2 | 28-04-2010 |
| | | | | JP | 2006112753 | A | 27-04-2006 |
| | | | | US | RE43805 | E | 20-11-2012 |
| | | | | US | RE43998 | E | 19-02-2013 |
| | | | | US | 2006080989 | A1 | 20-04-2006 |
| WO 2008130357 | A1 | | 30-10-2008 | CN | 101688696 | A | 31-03-2010 |
| | | | | EP | 2147264 | A1 | 27-01-2010 |
| | | | | HK | 1142664 | A1 | 08-03-2013 |
| | | | | JP | 2010525292 | A | 22-07-2010 |
| | | | | US | 2010115975 | A1 | 13-05-2010 |
| | | | | WO | 2008130357 | A1 | 30-10-2008 |
| WO 2008039204 | A1 | | 03-04-2008 | CN | 101512255 | A | 19-08-2009 |
| | | | | DK | 1974171 | T3 | 18-08-2014 |
| | | | | DK | 2821731 | T3 | 14-08-2017 |
| | | | | EP | 1974171 | A1 | 01-10-2008 |
| | | | | EP | 2821731 | A1 | 07-01-2015 |
| | | | | HK | 1135759 | A1 | 10-02-2012 |
| | | | | JP | 5027160 | B2 | 19-09-2012 |
| | | | | JP | 2009524797 | A | 02-07-2009 |
| | | | | TW | 200825349 | A | 16-06-2008 |
| | | | | US | 7891201 | B1 | 22-02-2011 |
| | | | | US | 2011100040 | A1 | 05-05-2011 |
| | | | | WO | 2008039204 | A1 | 03-04-2008 |

EPO FORM P0459

For more details about this annex : see Official Journal of the European Patent Office, No. 12/82